Europäisches Patentamt

(19) **European Patent Office**

Office européen des brevets

(11) Publication number: **0 013 430**
**A1**

## (12) EUROPEAN PATENT APPLICATION

(21) Application number: **79105384.6**

(22) Date of filing: **27.12.79**

(51) Int. Cl.³: **H 04 M 1/23**
**H 04 M 1/31**

(30) Priority: **08.01.79 GB 7900555**

(43) Date of publication of application:
**23.07.80 Bulletin 80/15**

(84) Designated Contracting States:
**BE DE FR IT NL SE**

(71) Applicant: **THE PLESSEY COMPANY LIMITED**
**Vicarage Lane**
**Ilford Essex, IG1 4AQ(GB)**

(72) Inventor: **Colebourne, Leonard**
**7 Cherrywood Gardens Porchester Road**
**Nottingham NG3 6LR(GB)**

(72) Inventor: **Leivars, Peter Nelson**
**50 Holly Avenue**
**Breaston Derby, DE7 3BG(GB)**

(74) Representative: **Goodman, Christopher**
**The Plessey Company Limited**
**Beeston Nottingham NG9 1LA(GB)**

(54) **Improvements in or relating to dial units for telephone sets.**

(57) A dial unit for a telephone comprises a substantially flat plate (10) having a central bearing (12) which is adapted to support the dial shaft (14). On one side of the plate (10) is located a return spring (18) for the shaft (14) and on the other side is arranged a gear train through which the shaft drives a centrifugal governor (36). The dial unit includes a trigger (70) consisting of a one piece plastic moulding incorporating a resilient extension (74) which is adapted to contact a portion (76) of the plate (10) and act as a return spring.

FIG.1.

./...

EP 0 013 430 A1

FIG.2.

- 1 -

## IMPROVEMENTS IN OR RELATING TO DIAL UNITS FOR

## TELEPHONE SETS

This invention relates to a dial unit for a telephone set comprising a substantially flat plate having a bearing portion formed therein adapted to support a dial shaft, a return spring adapted to return the dial shaft after a digit has been dialled and a gear train adapted to drive a governor.

It is known particularly from British Patent No. 1,444,580 to provide a bearing in a substantially flat plate for supporting the dial shaft of a telephone set in combination with a second bearing formed in a second plate spacedly mounted from the first plate.

British Patent No. 1,444,580 also discloses the use of a return spring and a gear train mounted between the two plates, the gear train being adapted to drive a governor also mounted between the two plates. The second plate is formed into a cover-like member to enclose the return spring, the gear train and the governor and most of the parts are formed in plastics material.

Whilst the object of the invention in British Patent No. 1,444,580 is to produce a compact and cheap dial unit for a telephone , use is made of a second plate to support the dial shaft and the gear train, return spring and governor are all located between these two plates. The arrangement necessitates a fairly substantial second plate to be made and indeed this is formed into a cover to enclose the various parts. This second plate needs to be securely positioned to the first plate since it supports the end of the dial shaft, and the whole dial unit will not be particularly cheap although most of the parts are formed in a plastics material, nor compact since the return spring, the gear train and the governor are all located between the two sheets.

The invention as claimed seeks to overcome these drawbacks by only supporting the dial shaft in the bearing portion formed in the one plate, locating the return spring on one side of the plate and mounting the gear train and the governor on the opposite side of the plate, the governor being of the centrifugal type.

Thus since the dial shaft is only supported by the one bearing the requirement for a second dial shaft supporting plate is aleviated, although a lightweight second plate may be used to support various parts of the gear train. By arranging the return spring on one side of the plate, and the gear train

on the other side a more compact dial unit is achieved. A centrifugal governor is also compact and the whole dial unit is thus compact, light in weight and relatively cheap, particularly since most of the parts are formed in a plastics material.

An embodiment of the invention will now be described by way of example only with reference to the accompanying drawings in which:

Figure 1 is a longitudinal cross sectional view of a dial unit for a telephone set in accordance with the invention,

Figure 2 is a rear view of the dial unit with the mechanism in one of its operating positions and,

Figure 3 is a rear view of the dial unit with the mechanism in another operating position.

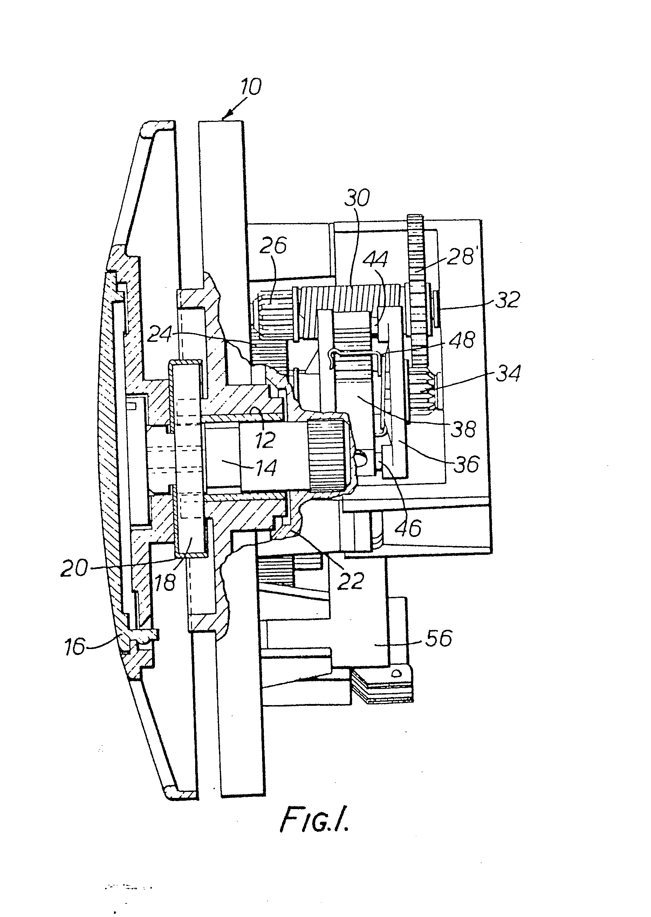

The dial unit consists of a circular plate 10 having a central bearing 12 which is adapted to support a shaft 14. On the left hand end (as viewed in Figure 1) of the shaft 14 is rigidly

- 4 -

secured a finger wheel 16, and between the finger wheel 16 and the plate 10 is located a shaft return spring 18 which is in the form of a coiled leaf spring. The outer end of the return spring is secured to a cage 20 which in turn is secured to the shaft 14, whilst the inner end of the return spring is fixed to the plate 10. The return spring 10 is intended to return the finger wheel back to a predetermined position against a stop (not shown) in well known manner.

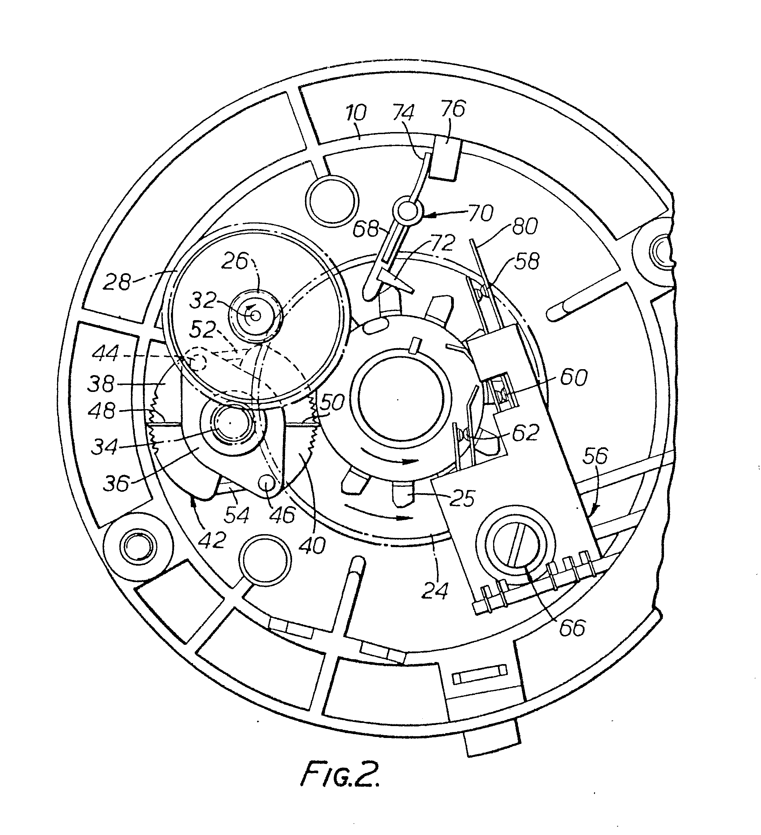

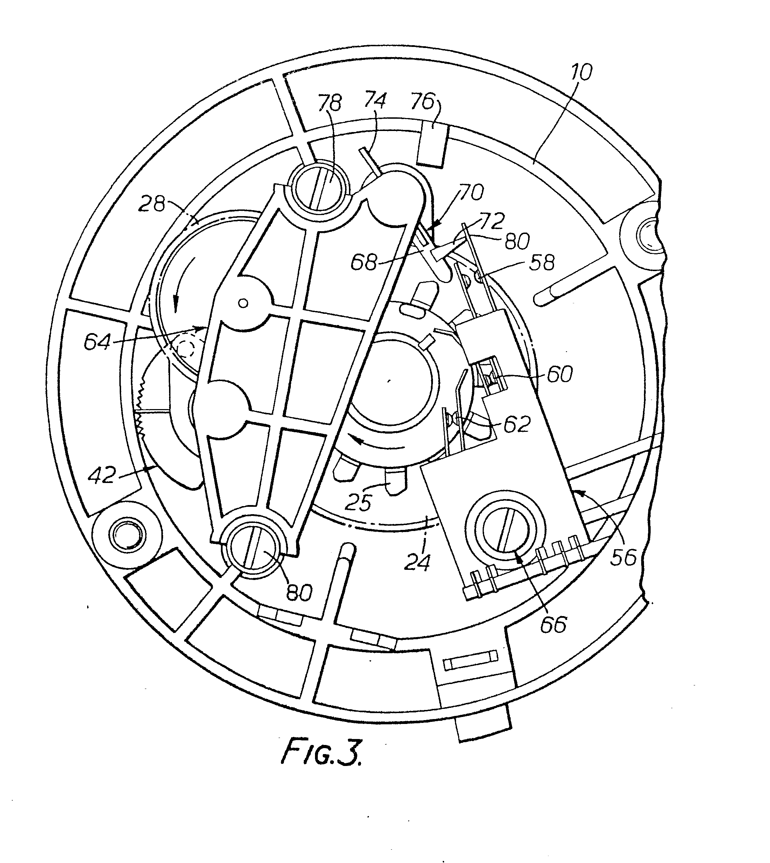

On the right hand end of the shaft 14 is secured an impulse plate 22 which comprises a gear wheel 24 formed integrally with a set of teeth or cams 25 (best seen in Figures 2 and 3). The gear wheel 24 meshes with a gear wheel 26 and the gear wheel 26 is mounted on the same shaft 32 as a gear wheel 28. The gear wheels 26 and 28 are connected together by a one-way clutch 30 which is in the form of a coil spring, rotation of the gear wheel 26 in a clockwise direction (when viewed in Figure 2) causing the clutch to slip, and the gearwheel 28 is not driven. Anticlockwise rotation of the gear wheel 26 will lock the clutch and allow the gearwheel 28 to rotate also in an anti-clockwise direction.

The gear wheel 28 meshes with a gear 34 which

- 5 -

is secured to a centrifugal governor 36. The centrifugal governor 42 consists of two weights 38 and 40 pivoted horizontally on a flange 36 on vertical pins 44 and 46 and held in position by tension springs 48 and 50. The end of each weight 38 and 40 is provided with an extension 52 and 54 respectively, and these extensions are adapted to rub on a stationary circular member (not shown) when the weights 38 and 40 move outwards under centrifugal force as the governor 36 rotates. The rubbing action of the extensions 52 and 54 on the stationary member restricts the speed of the governor depending on the force of the springs 48 and 50.

Also mounted on the same side of the plate 10 as the gear train by a bolt 66 is a block 56 which contains three sets of contacts 58, 60 and 62. The sets of contacts 60 and 62 are open and the set of contacts 58 are closed when the dial unit is inoperable, the sets 60 and 62 closing as soon as the dial is rotated, and the set 58 opening and closing a predetermined number of times depending on the digit dialled when the dial is released, in known manner.

The governor 42 and the shaft 32 are supported between the plate 10 and a bearing plate 64, and also supported between the plate 10 and the bearing plate 64 is a pivoted trigger 70. The trigger comprises a leg 68 having a projection 72 and a flexible web 74, the trigger being formed from a plastics material so that the web 74 is formed integrally with the leg 68 and the projection 72, but is thin enough to be deformable against a pillar 76 projecting from the plate 10. The bearing plate is secured to the plate 10 by bolts or screws 78 and 80.

Figure 2 illustrates the positions the components adopt when a digit is dialled on the dial unit (i.e. the dial is rotated in a clockwise direction, and the gear 24 is rotated in an anticlockwise direction when viewed in Figure 2. Figure 3 illustrates the positions adopted by the components when the dial is allowed to return under the action of the return spring 18 (i.e. the gear 24 rotates in a clockwise direction when viewed in Figures 2 and 3).

Referring therefore to Figure 2, a digit is being dialled on the dial unit and the gear wheel 24 together with the cams 25 rotate in an anticlockwise direction. The gearwheel 24 drives the gear wheel 26 but the gear 28 does not necessarily move depending upon the force required to rotate the governor 42, the tightness of the clutch 30 and the speed of dialling i.e. the clutch 30 can and most likely will slip at this time. The leg 68 of the trigger 70 contacts each of the cams 25 in turn, the web 74 being urged against the pillar 76 and being deformed as shown as each cam passes the end of the leg 68. The web 74 then returns the end of the leg into a position between adjacent cams 25 after each cam has passed the end of the leg 68.

When the required digit has been dialled and the finger wheel 16 is released, the gear wheel 24 together with the cams 25 rotate under the action of the return spring 18 in a clockwise direction and the trigger 70 moves to the position shown in Figure 3. The gear wheel 26 now moves in an anti-clockwise direction, the clutch 30 locks, and the gear wheel 28 drives the gear 34 and hence the centrifugal governor 42 in a clockwise direction. The centrifugal governor thus limits the speed of rotation of the gear wheel 24 and the cams 25.

The cams 25 successively contact the leg 68 and the projection 72 is successively moved into contact with one of the parts 80 of the set of contacts 58. The part 80 consists of a spring steel strip carrying a contact, and this contact is moved away from the other associated contact each time the projection 72 strikes it. The part 80 also acts as a return spring, pushing the leg

- 8 -

68 down between adjacent cams 25 _via_ the projection 72 whilst at the same time allowing the two contacts of the set 58 to make. Thus as the gearwheel 24 returns, the set of contacts 58 makes and breaks a certain number of times depending on the digit dialled on the finger wheel. If a second digit is dialled on the fingerwheel, the leg 68 of the trigger 70 is swung back into the position shown in Figure 2 and the operations described above are repeated.

All the components of the dial unit can conveniently be formed in a plastics material except for certain items such as the gear shafts, the sets of contacts 58, 60 and 62, and the governor weights 38 and 40, and it will be seen that the components can be quickly and cheaply made using injection moulding techniques. The simple centrifugal governor also enables only simple spur gears to be used. The left hand side of the plate 10 (as viewed in Figure 1) can also be used as a number plate, the numbers being printed on the plate or etched into the surface of the plate 10.

- 9 -

WHAT WE CLAIM IS:

1. A dial unit for a telephone set comprising a substantially flat plate (10) having a bearing portion (12) formed therein adapted to support a dial shaft (14), a return spring (18) adapted to return the dial shaft (14) after a digit has been dialled, a gear train adapted to drive a governor (36) characterised in that the dial shaft (14) is only supported in the bearing portion (12) formed in the plate (10), the return spring (18) is located on one side of the plate (10) the gear train and the governor (36) is mounted on the opposite side of the plate (10) and the governor is of the centrifugal type.

2. A dial unit as claimed in claim 1 characterised in that the plate (10) is circular, and the bearing portion (12) is mounted centrally of the circular plate (10).

3. A dial unit as claimed in claim 1 or claim 2 characterised in that a finger wheel (16) is supported on the dial shaft (14) on the same side of the plate (10) as the shaft return spring (18).

4. A dial unit as claimed in any preceding claim characterised in that a plurality of sets of electrical contacts (58, 60, 62) is mounted on the same side of the plate (10) as the gear train, the gear train including cam members (25) adapted to make and break the contact sets (60, 62) as the gears in the gear train rotate.

5. A dial unit as claimed in claim 4 characterised in that one of the contact sets (58) is caused to make and break by a pivoted trigger member (70) which is acted on by the cam members (25).

6. A dial unit as claimed in claim 5 characterised in that the trigger member (70) comprises a one-piece moulding having a resilient extension (74) formed thereon, which extension (74) is adapted to contact a portion (76) of the plate (10) when the trigger member (70) is pivoted and thereby acts as a return spring.

7. A dial unit as claimed in claim 6 characterised in that the trigger member (70) and its resilient extension (74) is formed of plastics material.

8. A dial unit as claimed in any preceding claim characterised in that all the gears in the gear train are formed in plastics material.

9. A dial unit as claimed in any preceding claim in which a one way clutch (30) is mounted in the gear train between one of the gears (26) and the drive (28, 34) to the centrifugal governor (36).

FIG.1.

0013430

FIG.2.

0013430

10

78 74 76

28

70

72

68 80 58

64

60

42

62

25

56

24

80

66

FIG.3.

European Patent Office

**EUROPEAN SEARCH REPORT**

EP

Application number

| | DOCUMENTS CONSIDERED TO BE RELEVANT | | CLASSIFICATION OF THE APPLICATION (Int Cl |
|---|---|---|---|
| Category | Citation of document with indication. where appropriate. of relevant passages | Relevant to claim | H 04 M 1/23 1/31 |
| X | GB - A - 1 147 601 (EMI) <br> * Page 2, lines 1-48, 84-89, 102-125; page 3, lines 43-69; figures * <br> -- | 1-9 | |
| X | GB - A - 1 256 435 (ISEC) <br> * Claim 1; figure 2 * <br> -- | 1-4 | |
| X | US - A - 2 868 887 (GRESHEL) <br> * Column 4, lines 31-34; column 5, lines 53-56; figure 1 * <br> -- | 1-5,9 | TECHNICAL FIELDS SEARCHED (Int.Cl <br> H 04 M 1/23 1/30 1/31 1/315 1/34 |
| X | SIEMENS ZEITSCHRIFT, vol. 44, no. 5, May 1970, pages 313-315 Erlangen, DE. KALLHARDT: "Fernsprech-Nummern-schalter NS61a, neu in Konstruktion und Leistung" <br> * Page 315, right-hand column, lines 19-28; figures 1,3-5 * <br> -- | 1-4,8, 9 | |
| X | DE - B - 1 151 562 (SIEMENS) <br> * Column 4, lines 2-16; figures 1,2,4,5 * <br> -- | 1-4,9 | CATEGORY OF CITED DOCUMENTS |
| X | DE - C - 291 849 (SIEMENS) <br> * Figures 1,2 * <br> -- | 1-4,9 | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | GB - A - 1 260 766 (PLESSEY) <br> * Page 1, lines 50-57; page 1, line 86 - page 2, line 33; | 1,2,8, 9 | &: member of the same patent family, corresponding document |

The present search report has been drawn up for all claims

| Place of search | Date of completion of the search | Examiner |
|---|---|---|
| The Hague | 05-03-1980 | YOULE |

EPO Form 1503.1   06.78

## EUROPEAN SEARCH REPORT

European Patent Office

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | figures 1,2 * | | |
| | -- | | |
| D | GB - A - 1 444 580 (ISEC)<br>* Claim 1; figure 3 * | 1,2,4, 8 | |
| | -- | | |
| | GB - A - 1 201 274 (ISEC)<br>* Claim 1; figure 1 * | 5-7 | |
| | -- | | TECHNICAL FIELDS SEARCHED (Int. Cl. 3) |
| | REVIEW OF THE ELECTRICAL COMMUNI-CATION LABORATORIES, vol. 24, nos. 5,6, May/June 1976, pages 461-468 Tokyo, JP.<br>FURUSAWA: "Model 60 Plastic Dials for Telephone Sets"<br>* Page 462, left-hand column, line 4 - right-hand column, line 22; figures 1,3 * | 8 | |
| | ---- | | |

EPO Form 1503.2   06.78